# EUROPÄISCHE PATENTSCHRIFT

(11) **EP 0 355 800 B1**
(45) Veröffentlichungstag und Bekanntmachung des Hinweises auf die Patenterteilung: **20.04.1994**
(21) Anmeldenummer: 89115510.3
(22) Anmeldetag: 23.08.1989
(51) Int. Cl.: C07F 7/08, C07F 7/12

(54) **Verfahren zur Herstellung von (Aryl)-(dimethyl)-(3-arylpropyl)-silanen**
Process for the preparation of aryl-dimethyl-3-arylpropyl-silanes
Procédé de préparation d'aryl-diméthyl-3-arylpropyl-silanes

(30) Priorität: 26.08.1988 DE 3828926
(43) Veröffentlichungstag der Anmeldung: 28.02.1990
(73) Patentinhaber: HOECHST AKTIENGESELLSCHAFT, 65926 Frankfurt am Main (DE)
(72) Erfinder: Schubert, Hans Herbert, Dr., D-6000 Frankfurt am Main 71 (DE)

(56) Entgegenhaltungen:
- EP-A- 0 224 024
- DE-A- 3 604 781
- US-A- 4 709 068
- Chemical Abstracts Band 97,nr. 2,12.Juli 1982,Seite 29, Spalte 1, Zusammenfassung nr.. 7147q, Columbus, Ohio, USA; Y. Chen et al.: "Synthesis and activity of silicone-supported transition metal complex catalysts. I Synthesis of gamma-halophenylpropyltrichlorosilane and gamma-halophenylpropyakyldichlorosilane monomers and their tetraethoxysilane copolymers"
- Journal of Organic chemistry Band 29, nr. 9, September 1964, Seiten 2519-2524; M.C. Musolf et al.: "The addition of silicon hydrides to olefinic double bonds.X. Addition to Phenylalkenes. The Nuclear magnetic resonance proton spectra of (Phenylalkyl)silanes"

## Beschreibung

Aus DE-A-3 604 781 ist unter anderem ein Verfahren zur Herstellung von (4-Chlorphenyl)-dimethyl-[3-phenoxyphenyl)-propyl]-silan durch Umsetzung von Dimethyldichlorsilan nacheinander mit einer Grignardlösung hergestellt aus Magnesium und 4-Brom-1-chlor-benzol gefolgt von einer solchen hergestellt aus Magnesium und (3-Phenoxyphenyl)-propyl-bromid bekannt, welches die Zielverbindung in einer Ausbeute von 46 % der Theorie liefert.

Weiterhin werden in J. Org. Chem. 29 [1964] 2519-2524 Dichlor-(3-phenylpropyl)-methylsilan und in Wuhan Daxue Xuebao, Ziran Kerueban 1981, Nr. 4, Seiten 61-67 (Chem. Abstr. 97 [1982] 7147q) einige [-(Halogenphenyl)-propyl]-dichlor-methyl-silane beschrieben.

Es wurde ein neues Verfahren gefunden, welches ausgehend von Dichlormethylsilan über eine katalytische Hydrosilylierung einer Kohlenstoff-Doppelbindung, gefolgt von einer zweifachen Grignard-Reaktion zu Aryl-dimethyl-(3-arylpropyl)-silanen führt.

Gegenstand der vorliegenden Erfindung daher ist ein Verfahren zur Herstellung von Verbindungen der Formel I 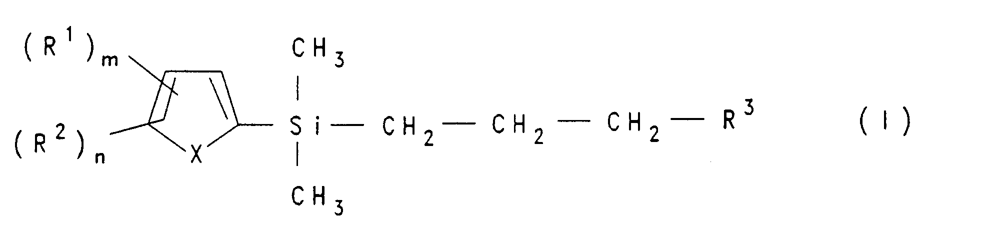 worin
X = CH = CH, N = CH, CH = N oder S,
R₁ , R² = unabhängig voneinander Halogen, (C₁-C₄)Alkyl, (C₁-C₄)Alkoxy (Ci-C₄)Alkylthio, (C₁-C₄)-Halogenalkyl, (C₁-C₄)Halogenalkoxy, (C₁-C₄) Halogenalkylthio oder die bivalente Gruppe Methylendioxy,
R³ = ein Radikal der Formeln (A), (B), (C) 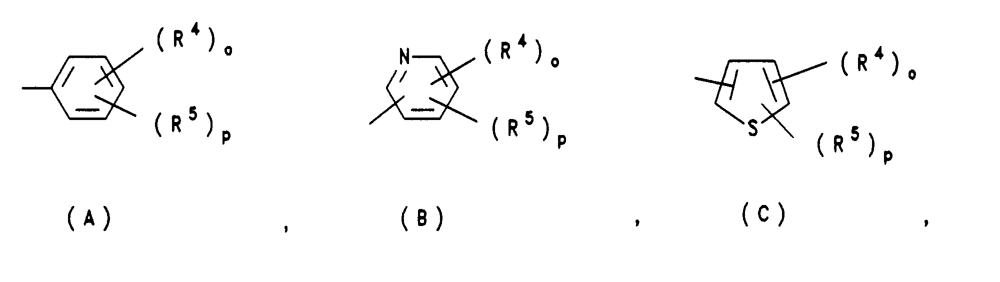
worin
R⁴, R⁵ = unabhängig voneinander Halogen, (C1-C4)Alkyl, (C₁-C₃)Alkoxy oder ein Radikal der Formel (D) 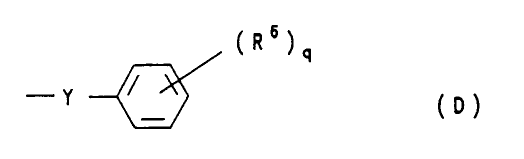
mit
_{R}⁶ = Halogen und
Y = CH₂, O oder S bedeuten, und m, n, o, p, q = 0, 1 oder 2 bedeuten, dadurch gekennzeichnet, daß man eine Verbindung der Formel II 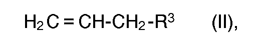
worin R³ die Bedeutung wie in Formel I besitzt, in Gegenwart eines für Hydrosilylierungsreaktionen geeigneten Katalysators mit Dichlormethylsilan umsetzt und 2das entstehende Zwischenprodukt der Formel III 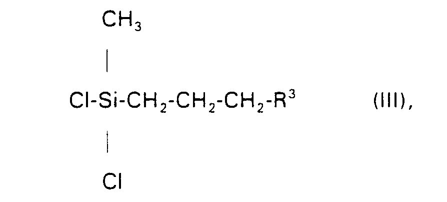 worin R³ die Bedeutung wie in Formel I besitzt, nacheinander, ohne Isolierung der entstehenden Zwischenstufe, mit einem Methylmagnesiumhalogenid und einem Arylmagnesiumhalogenid der allgemeinen Formel IV 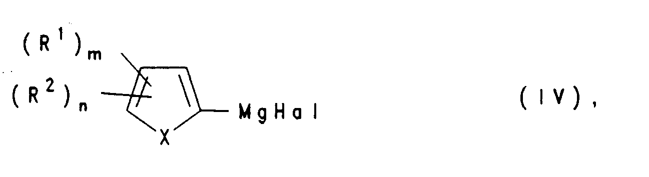 worin R¹, R², m, n, und X die Bedeutung wie in Formel I besitzen und Hal = Halogen bedeutet, umsetzt.

Das entstandene Zwischenprodukt der Formel III kann direkt oder nach vorheriger Reinigung nach üblichen Methoden zur weiteren Umsetzung verwendet werden.

Die Reihenfolge der Reaktion der Verbindung III mit den Grignardreagenzien ist austauschbar. Geeignete Katalysatoren für Hydrosilylierungsreaktionen werden von E. Lukevics et al. in J. Organometallic Chem. Library 5, S. 1-180 (1970) beschrieben. Es sind dies z.B. Pd(II)-, Pt(IV)-, Rh(1)- oder Ni(II)-Komplexsalze, Fe-pentacarbonyl oder auch organ. Peroxide in Verbindung mit UV-Bestrahlung. Erfindungsgemäß bevorzugt wird Hexachlorplatinsäure als Katalysator verwendet.

Die Erfindung betrifft auch die Verwendung von Verbindungen der Formel III für die Herstellung von Pflanzenschutzmittelwirkstoffen der Formel I.

Weiterhin betrifft die Erfindung Verbindungen der Formel III, in welcher die Reste und Variablen wie oben definiert sind, ausgenommen
Dichlor-(3-phenylpropyl)-methyl-silan,
[(4-Chlorphenyl)-propyl]-dichlor-methyl-silan,
[(3-Chlorphenyl)-propyl]-dichlor-methyl-silan,
[(4-Bromphenyl)-propyl]-dichlor-methyl-silan und
[(3-Bromphenyl)-propyl]-dichlor-methyl-silan

Die Verbindungen der Formeln I, II und IV sind bekannt und besitzen als insektizide, akarizide oder nematozide Wirkstoffe oder deren Vorstufen Bedeutung (siehe EP-A 0224 024, EP-A 0249 015, ZA 88/6875).

In diesen europäischen Offenlegungsschriften werden Verfahren zu deren Herstellung bzw. deren Verwendung bei der Herstellung der Verbindungen I beschrieben.

Bekannt ist die Synthese der Verbindungen I ausgehend von Aryl-dimethylsilanen der allgemeinen Formel V, 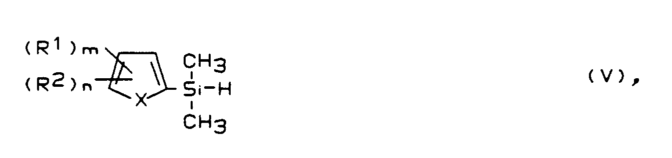
welche mit Olefinen der Formel II zu den Wirkstoffen der Formel I umgesetzt werden. Zur Darstellung der Hydrosilane V benötigt man jedoch das teure und nur in geringem Umfang verfügbare Chlordimethylsilan. Alternativ lassen sich die Hydrosilane V durch die im technischen Maßstab problematische Reduktion entsprechender Halogen- oder Alkoxy-silane darstellen (EPA 0224 024).
Beide Nachteile vermeidet das erfindungsgemäße Verfahren. Überraschend war bei der gefundenen Synthesesequenz I_{→}III→I die mit sehr guten Ausbeuten verlaufende Bildung der Verbindungen I aus den Zwischenstufen III, da die selektive Bildung eines Monosubstitutionsproduktes nach einer Reaktion der Verbindung III, mit einem der beiden Grignardreagenzien nicht vorhersehbar war. Zur Erzielung hoher Ausbeuten und zur Vermeidung einer aufwendigen Abtrennung des zunächst gewünschten Monosubstitutionsproduktes der Formeln Vla oder Vlb ist die Selektivität der Reaktion der erfindungsgemäßen Zwischenprodukte III von entscheidender Bedeutung. Das erfindungsgemäße Verfahren läßt sich somit als verfahrenstechnisch einfach zu handhabende Eintopfreaktion durchführen

Andere Dihalogensilane wie z.B. Dichlordimethylsilan oder Methyldichlorsilan liefern mit einem Äquivalent Grignardreagenz nur mittlere Ausbeuten des Monosubstitutionsproduktes ¹⁻⁶).

Sie werden daher häufig in einem ökonomisch ungünstigen, großen Überschuß eingesetzt 1,2,6) . Eine weitere Möglichkeit der Reaktionslenkung in Richtung der Monosubstitutionsprodukte besteht im vorgezogenen Austausch einer Halogenfunktion gegen einem Aminrest, der nachfolgenden Umsetzung mit dem metallorganischen Reagenz und der abschließenden Umwandlung des resultierenden Aminosilans in das angestrebte Chlorsilan ⁷). Naturgemäß ist dieser Prozeß aufgrund seiner Stufenzahl für die großtechnische Anwendung nur bedingt geeignet.

Bei geeigneter Reaktionsführung reagieren die Zwischenprodukte III jedoch überraschenderweise völlig selektiv mit einem Äquivalent Grignardreagenz zu den -üblicherweise nicht isolierten- Intermediaten der allgemeinen Formel Vla bzw. Vlb;
¹) K.A. Adrianov, N.V. Delazari, Doklady Akad. Nauk. SSSR 122, 393. Engl. Ed. S. 689;
²) _{R}._{N}. _{L}ewis, J. Amer. Chem. Soc. 70, 1115 (1948);
³) D.W. Lewis, G.C. Gainer, J. Amer. Chem. Soc. 74, 2931 (1952);
⁴) V.A. Ponomarenko, A. Snegova, Yu. P. Egorov, Izvest. Akad. Nauk. SSSR, Otdel Khim. Nauk 1960, 244; Engl. Ed. S. 222;
⁵) L.W. Breed, W.J. Haggerty jr., J. Org. Chem. 27, 257 (1962);
⁶⁾ J. Hetflejs, F. Mares, V. Clevalovsky, Collection Czech. Chem. Commun. 30, 1643 (1965);
⁷⁾ M. Takamizawa, M. Unemura (Shin-Etsu Chem. Industry Co., Ltd.), Jpn. Kokai Tokkyo Koko 79, 109, 923 (29.8.1979), Appl. 78/16063 (15.2.1978); C.A. 92,146898v(1980); 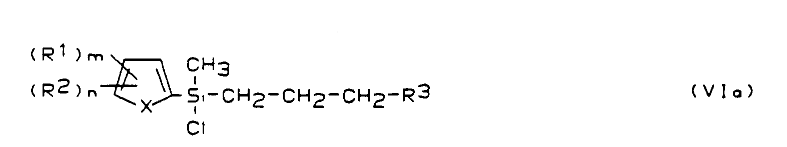 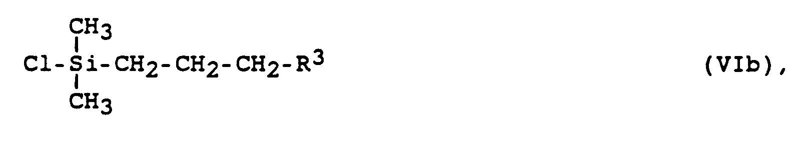
die dann mit der jeweils korrespondierenden, metallorganischen Komponente die Verbindungen der Formel I liefern. Die besten Ausbeuten und Reinheiten werden dabei erzielt, wenn man die Substitution des ersten Halogenatoms bei Temperaturen zwischen -78 ° C und + 80 ° C, bevorzugt bei -20 ° C bis + 30 ° C durchführt, wobei der optimale Temperaturbereich mit dem organischen Rest des Grignardreagenzes variiert. Dwr Ersatz des zweiten Halogens kann dann bei beliebigen Temperaturen innerhalb des Intervalls -78 ° C bis +200_{°}C, bevorzugt 20 ° C-100 ° C erfolgen. Als Lösungsmittel kommen etherische Solventien wie z.B. Diethylether, Diisopropylether, Dibutylether, Tetrahydrofuran, Glyme, Diglyme, Triglyme, Tetraglyme oder Dioxan sowie Mischungen derselben mit aliphatischen oder aromatischen Kohlenwasserstoffen wie z.B. Hexan, Heptan, Benzol, Toluol oder Xylol zur Anwendung. Bevorzugtes Lösungsmittel ist Tetrahydrofuran. Pro Mol der Zwischenstufe der allgemeinen Formel III werden 1,00-1,05 Mol, bevorzugt 1,00-1,02 Mol, des zur Erstsubstitution verwendeten Grignardreagenzes eingesetzt. Die zur Zweitsubstitution dienende metallorganische Verbindung wird mit 1,00-1,10 Mol, bevorzugt mit 1,00-1,05 Mol, je Mol der Zwischenstufe III verwendet. Die Menge des Katalysators variiert und beträgt z.B. bei Pt(IV)-Komplexsalzen zwischen 0,1-10 ppm bezogen auf die Reaktionslösung.

Die Aufarbeitung des Reaktionsproduktes (Verbindung der Formel I) geschieht auf übliche Weise Z.B. durch Zugabe von Wasser, Abtrennung der Salzlösung und Eindampfen der organischen Phase. Das erhaltenen Rohprodukt kann durch Vakuumdestillation weiter gereinigt werden. Das erfindungsgemäße Verfahren wird durch die nachfolgenden Beispiele verdeutlicht:

### Ausführungsbeipiele

### A) Herstellung einer Verbindung der Formel III

Unter Rühren vermischt man ca. 15 Tropfen einer 30%igen Hexachlorplatinsäurelösung in Isopropanol mit 170.6 g (1,00 Mol) 4-Fluor-3-chlor-allylbenzol. Ca. 15 ml dieser Mischung werden anschließend in ein unter Stickstoff stehendes Reaktionsgefäß dosiert und mit etwa 10 ml von insgesamt 126.5 g (1,10 Mol) Dichlormethylsilan versetzt. Nach Anheizen auf 50 ° C setzt die exotherme Reaktion ein. Die restlichen Eduktmengen werden nun aus separaten Tropftrichtern so zugegeben, daß sich die Innentemperatur zwischen 85 und 95 ° C hält. Anschließend wird noch 2 h bei 90 ° C nachgerührt. Die Destillation der Reaktionsmischung liefert 233 g (81,6%) (Dichlor)-(methyl)-(3-(3-chloro-4-fluoro-phenyl)-propyl)-silan vom Kp_{o.8 =}103-109 ° C.

### B) Herstellung einer Verbindung der Formel I

Zu einer Lösung von 129.3 g (0.453 Mol) des im Vorbeispiel erhaltenen Dichlorsilans in 250 ml wasserfreiem THF tropft man bei -20 ± 1 _{°} C die aus 97.8 g (0.487 Mol) 4-Bromphenetol, 12 g Magnesium und 360 ml THF bereitete Grignardlösung. Anschließend rührt man noch 0.5 h bei -20 ° C und läßt danach die Mischung langsam Raumtemperatur annehmen. Nach Zugabe von 170 ml 2.9 M-Methylmagnesiumchloridlösungin THF erhitzt man 1 h unter Rückfluß,kühlt auf 30 ° C und zersetzt das überschüssige Grignardreagenz durch tropfenweise Zugabe von 20 ml Wasser. Das Lösungmittel wird im Wasserstrahlvakuum abgedampft und der Rückstand zwischen 700 ml Heptan und 500 ml Wasser verteilt. Nach Abtrennen der wäßrigen Salzlösung wird die organische Schicht noch dreimal mit je 500 ml Wasser gewaschen, dann über Na₂S0₄ getrocknet und eingedampft. Man erhält 162.7 g eines blaßgelben Öls. Die abschließende Destillation liefert 147.7 g (93%) (4-Ethoxyphenyl)-(dimethyl-(3-(3-chloro-4-fluoro-phenyl)-propyl)-silan von Kpₒ.₄ =158-174 ° C und einer Reinheit von 97% (gaschromatographisch bestimmt).

In Anlehnung an diese Vorschriften erhält man u.a. folgende Verbindungen in hoher Ausbeute und Reinheit:
- (4-Ethoxyphenyl)-(dimethyl)-(3-(3-phenoxy-phenyl)propyl)-silan
- (4-Ethoxyphenyl)-(dimethyl)-(3-(4-fluoro-3-phenoxy-phenyl)-propyl)-silan
- (Dimethyl)-(3,4-methylendioxyphenyl)-(3-(3-phenoxy-phenyl)-propyl)-silan
- (2-Ethoxypyrid-5-yl)-(dimethyl)-(3-(3-phenoxy-phenyl-propyl)-silan
- (Dimethyl)-(2-(2,2,2-trifluorethoxy)-pyrid-5-yl)-(3-(4-fluoro-3-phenoxy-phenyl)-propyl)-silan
- (2-Ethylthiopyrid-5-yl)-(dimethyl)-(3-(4-fluoro-3-phenoxy-phenyl)-propyl)-silan
- (2-Ethoxythien-5-yl)-(dimethyl)-(3-(4-fluoro-3-phenoxy-phenyl)-propyl)-silan
- (4-Ethoxyphenyl)-(dimethyl)-(3-(6-phenoxypyrid-2-yl)-propyl)-silan
- (2-(2,2,2-Trifluorethoxy)-pyrid-5-yl)-(dimethyl)-[3-(4-fluoro-3-(4-fluorophenoxy)-phenyl)-propyl]-silan
- (4-Ethoxyphenyl)-(dimethyl)-(3-(4-phenoxythien-2-yl)-propyl)-silan.

## Patentansprüche (Patentansprüche für folgende(n) Vertragsstaat(en) : AT, BE, CH, DE, FR, GB, IT, LI, NL)

1. Verfahren zur Herstellung von Verbindungen der Formel I 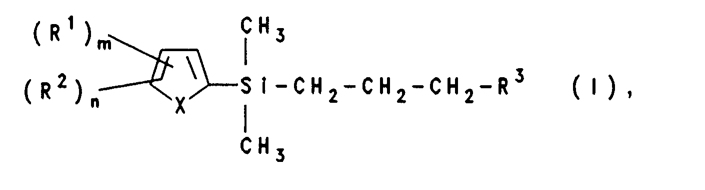 worin
X = CH = CH, N = CH, CH = N oder S,
R¹, R² = unabhängig voneinander Halogen, (C₁ -C₄ )Alkyl, (C₁-C₄)Alkoxy, (C₁ -C₄ )Alkylthio, (C₁-C₄)Halogenalkyl, (C1-C4)Halogenalkoxy, (C1-C4)Halogenalkylthio oder die bivalente Gruppe Methylendioxy
R³ = ein Radikal der Formeln (A), (B), (C) 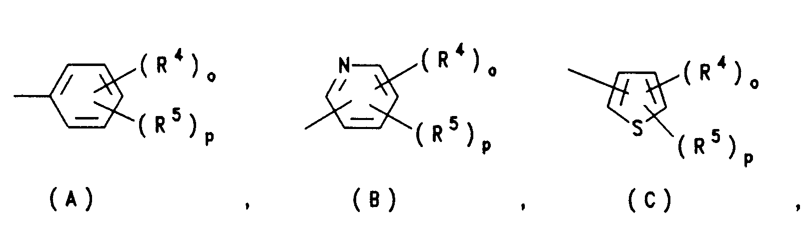
worin
R⁴, R⁵ = unabhängig voneinander Halogen, (C₁-C₄)Alkyl, (C₁-C₃)Alkoxy oder ein Radikal der Formel (D) 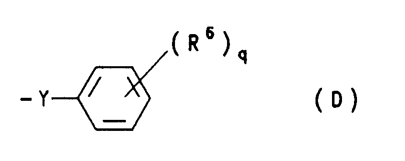
mit
_{R}⁶ = Halogen und
Y = CH₂, O oder S bedeuten, und
m, n, o, p, q = 0, 1 oder 2 bedeuten, dadurch gekennzeichnet, daß man eine Verbindung der Formel II 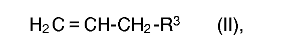
worin R³ die Bedeutung wie in Formel I besitzt, in Gegenwart eines für Hydrosilylierungsreaktionen geeigneten Katalysators mit Dichlormethylsilan umsetzt und das entstehende Zwischenprodukt der Formel III 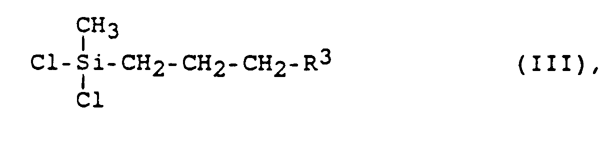 worin R³ die Bedeutung wie in Formel I besitzt, nacheinander, ohne Isolierung der entstehenden Zwischenstufe, mit einem Methylmagnesiumhalogenid und einem Arylmagnesiumhalogenid der allgemeinen Formel 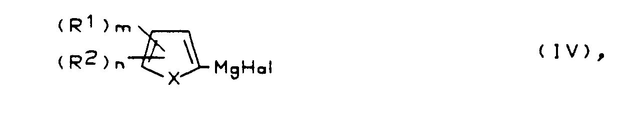 worin R¹, R², m, n und X die Bedeutung wie in Formel I besitzen und Hal = Halogen bedeutet, umsetzt.

Verfahren gemäß Anspruch 1, dadurch gekennzeichnet, daß man die erste Substitution eines Halogenatoms der Verbindung der Formel III bei Temperaturen zwischen -78 ° C und 80 ° C durchführt.

Verfahren gemäß Anspruch 1 oder 2, dadurch gekennzeichnet, daß man die erste Substitution eines Halogenatoms der Verbindung der Formel III bei Temperaturen von -20 ° C bis +30 ° C durchführt.

. Verfahren gemäß einem oder mehreren der Ansprüche 1 bis 3, dadurch gekennzeichnet, daß man die Reaktion in Tetrahydrofuran als Lösungsmittel durchführt.

. Verbindung der Formel III 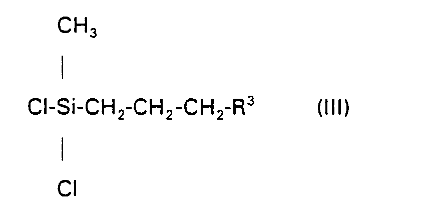 worin
R³ = ein Radikal der Formeln (A), (B), (C) 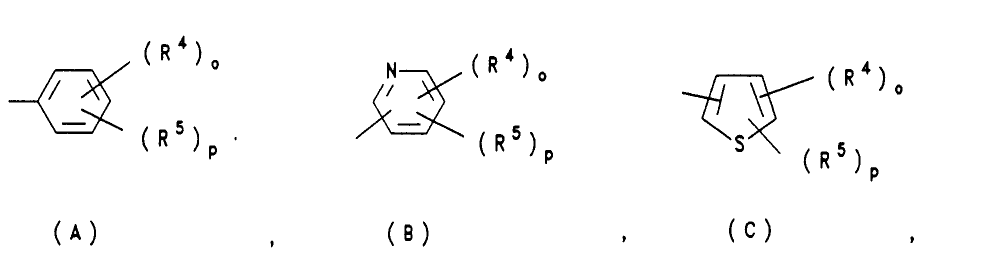
worin R⁴, R⁵ = unabhängig voneinander Halogen, (C₁-C₄)Alkyl, (C₁-C₃)Alkoxy oder ein Radikal der Formel 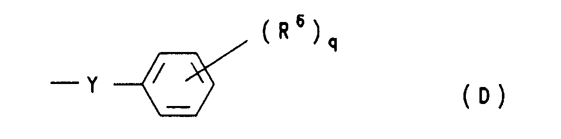 mit
_{R}⁶ = Halogen und
Y = CH₂, O oder S bedeuten, und
o, p, q für die Zahlen 0, 1 oder 2 stehen, mit Ausnahme der Verbindungen Dichlor-(3-phenylpropyl)-methyl-silan, [(4-Chlorphenyl)-propyl]-dichlor-methyl-silan, [(3-Chlorphenyl)-propyl]-dichlor-methyl-silan, [(4-Bromphenyl)-propyl]-dichlor-methyl-silan und [(3-Bromphenyl)-propyl]-dichlor-methyl-silan.

6. Verwendung von Verbindungen der Formel III gemäß Anspruch 5 zur Herstellung von Pflanzenschutzmittelwirkstoffen der allgemeinen Formel I.

## Patentansprüche (Patentansprüche für folgende(n) Vertragsstaat(en) : ES)

1. Verfahren zur Herstellung von Verbindungen der Formel I 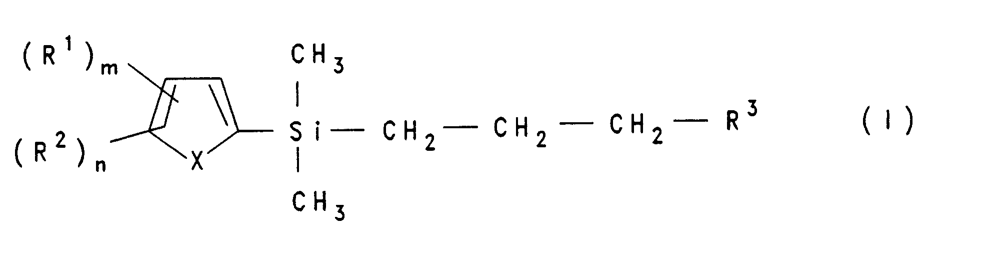 worin
X = CH = CH, N = CH, CH = N oder S,
R¹, R² = unabhängig voneinander Halogen, (C₁-C₄)Alkyl, (C₁-C₄)Alkoxy, (C₁-C₄ )Alkylthio, (C₁-C₄)Halogenalkyl, (C1-C4)Halogenalkoxy, (C₁-C₄)Halogenalkylthio oder die bivalente Gruppe Methylendioxy
R³ = ein Radikal der Formeln (A), (B), (C) 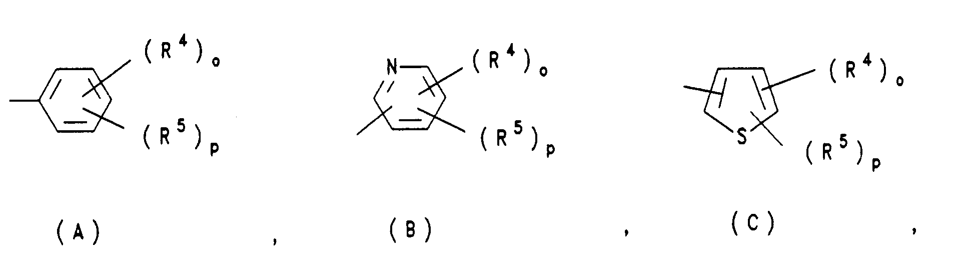 worin
R⁴, R⁵ = unabhängig voneinander Halogen, (C₁-C₄)Alkyl, (C₁-C₃)Alkoxy oder ein Radikal der Formel (D) 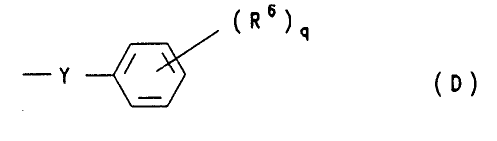
mit
_{R}⁶ = Halogen und
Y = CH₂, O oder S bedeuten, und
m, n, o, p, q = 0, 1 oder 2 bedeuten, dadurch gekennzeichnet, daß man eine Verbindung der Formel II 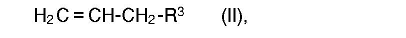
worin R³ die Bedeutung wie in Formel I besitzt, in Gegenwart eines für Hydrosilylierungsreaktionen geeigneten Katalysators mit Dichlormethylsilan umsetzt und das entstehende Zwischenprodukt der Formel III 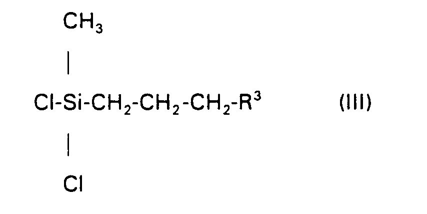 worin R³ die Bedeutung wie in Formel I besitzt, nacheinander, ohne Isolierung der entstehenden Zwischenstufe, mit einem Methylmagnesiumhalogenid und einem Arylmagnesiumhalogenid der allgemeinen Formel 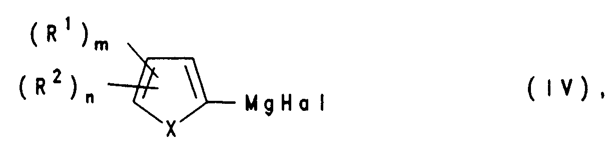 worin R¹, R², m, n und X die Bedeutung wie in Formel I besitzen und Hal = Halogen bedeutet, umsetzt.

2. Verfahren gemäß Anspruch 1, dadurch gekennzeichnet, daß man die erste Substitution eines Halogenatoms der Verbindung der Formel III bei Temperaturen zwischen -78 °C und 80 °C durchführt.

3. Verfahren gemäß Anspruch 1 oder 2, dadurch gekennzeichnet, daß man die erste Substitution eines Halogenatoms der Verbindung der Formel III bei Temperaturen von -20 °C bis +30°C durchführt.

4. Verfahren gemäß einem oder mehreren der Ansprüche 1 bis 3, dadurch gekennzeichnet, daß man die Reaktion in Tetrahydrofuran als Lösungsmittel durchführt.

5. Verwendung von Verbindungen der Formel III gemäß Anspruch 1 zur Herstellung von Pflanzenschutzmittelwirkstoffen der Formel I.

## Claims (Claims for the following Contracting State(s) : AT, BE, CH, DE, FR, GB, IT, LI, NL)

1. A process for the preparation of a compound of the formula I 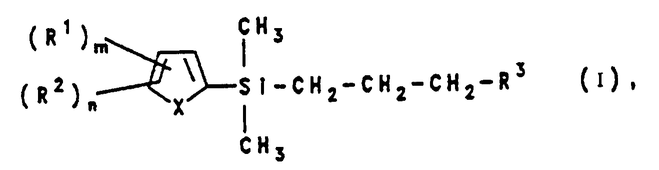 where
X is CH = CH, N = CH, CH = N or S,
R¹ and R² independently of one another are halogen, (C₁-C₄)alkyl, (C₁-C₄)alkoxy, (C₁-C₄)-alkylthio, (C₁-C₄)haloalkyl, (C1-C4)haloalkoxy, (C₁-C₄)haloalkylthio or the bivalent methylenedioxy group,
R³ is a radical of the formulae (A), (B), (C) 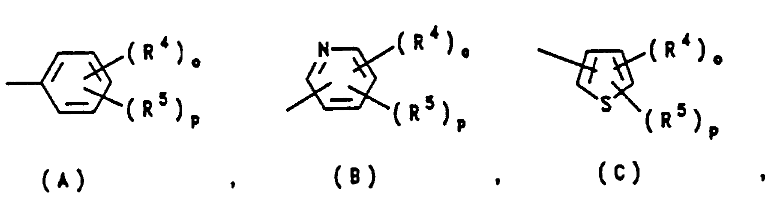
where
R⁴ and R⁵ independently of one another are halogen, (C,-C4)alkyl, (C₁-C₃)alkoxy or a radical of the formula (D) 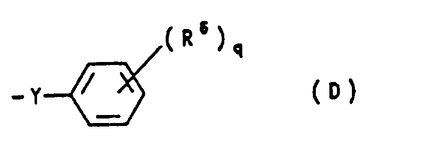
in which
_{R}6 is halogen and
Y is CH₂, O or S, and
m, n, o, p and q are 0, 1 or 2, which comprises reacting a compound of the formula II 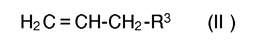
where R³ is as defined in formula I, with dichloromethylsilane in the presence of a catalyst suitable for hydrosilylation reactions, and reacting the resulting intermediate of the formula III 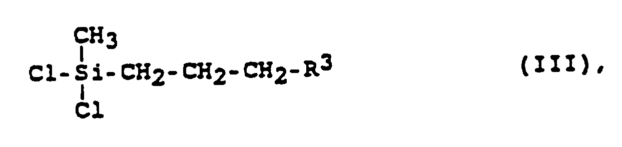 where R³ is as defined in formula I, in succession and without isolation of the resulting intermediate, with a methylmagnesium halide and an arylmagnesium halide of the formula IV 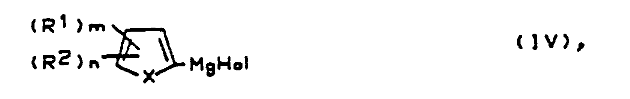 where R¹, R², m, n and X are as defined in formula I and Hal is halogen.

2. The process as claimed in claim 1, wherein the first substitution of a halogen atom of the compound of the formula III is carried out at temperatures between -78 ° C and 80 ° C.

3. The process as claimed in claim 1 or 2, wherein the first substitution of a halogen atom of the compound of the formula III is carried out at temperatures from -20 ° C to + 30 ° C.

4. The process as claimed in one or more of claims 1 to 3, wherein the reaction is carried out in tetrahydrofuran as the solvent.

5. A compound of the formula III 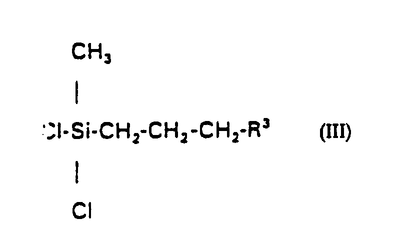 where
R³ is a radical of the formulae (A), (B), (C) 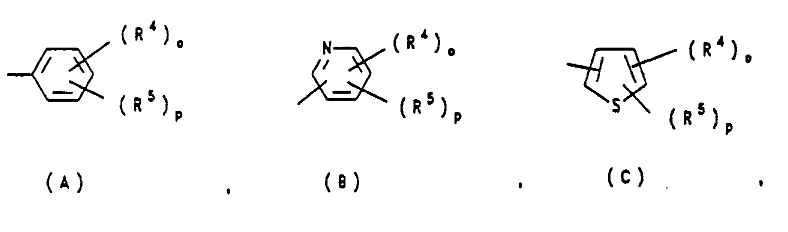
where
R⁴ and R⁵ independently of one another are halogen, (C1-C4)alkyl, (C₁-C₃)alkoxy or a radical of the formula 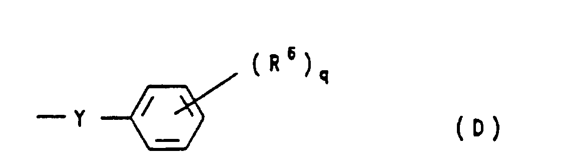
in which
_{R}⁶ is halogen and
Y is CH₂, O or S, and
o, p and q are the numbers 0, 1 or 2, with the exception of the compounds dichloro(3-phenylpropyl)-methylsilane, (4-chlorophenyl)propyldichloro-methylsilane, (3-chlorophenyl)propyldichloromethylsilane, (4-bromophenyl)propyldichloromethylsilane and (3-bromophenyl)propyldichloromethylsilane.

6. The use of a compound of the formula III as claimed in claim 5, for the preparation of active compounds of the formula I for plant protection agents.

## Claims (Claims for the following Contracting State(s) : ES)

1. A process for the preparation of a compound of the formula I 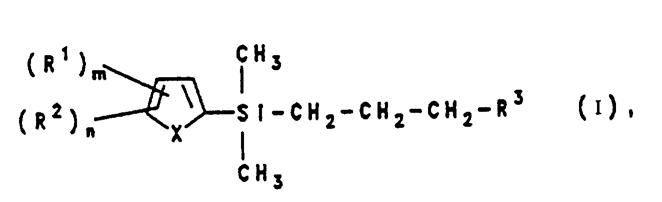 where
X is CH = CH, N = CH, CH = N or S,
R¹ and R² independently of one another are halogen, (C₁-C₄)alkyl, (C₁-C₄)alkoxy, (C₁-C₄)-alkylthio, (C₁-C₄)haloalkyl, (C1-C4)haloalkoxy, (C₁-C₄)haloalkylthio or the bivalent methylenedioxy group,
R³ is a radical of the formulae (A), (B), (C) 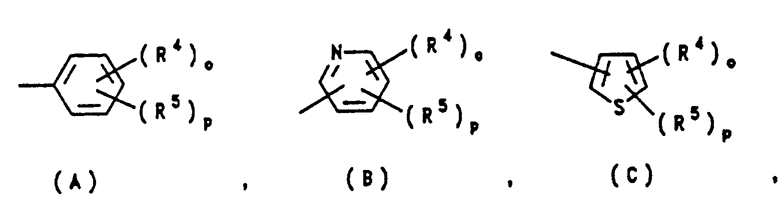
where
R⁴ and R⁵ independently of one another are halogen, (C₁-C₄)alkyl, (C₁-C₃)alkoxy or a radical of the formula (D) 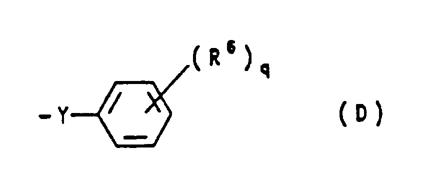 in which
_{R}6 is halogen and
Y is CH₂, O or S, and
m, n, o, p and q are 0, 1 or 2, which comprises reacting a compound of the formula II H₂C = CH-CH₂-R³ (II)
where R³ is as defined in formula I, with dichloromethylsilane in the presence of a catalyst suitable for hydrosilylation reactions, and reacting the resulting intermediate of the formula III 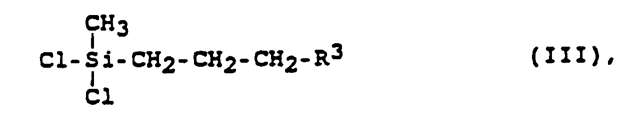 where R³ is as defined in formula I, in succession and without isolation of the resulting intermediate, with a methylmagnesium halide and an arylmagnesium halide of the formula IV 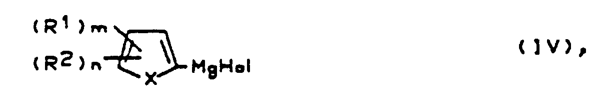 where R¹, R², m, n and X are as defined in formula I and Hal is halogen.

2. The process as claimed in claim 1, wherein the first substitution of a halogen atom of the compound of the formula III is carried out at temperatures between -78 ° C and 80 ° C.

3. The process as claimed in claim 1 or 2, wherein the first substitution of a halogen atom of the compound of the formula III is carried out at temperatures from -20 ° C to + 30 ° C.

4. The process as claimed in one or more of claims 1 to 3, wherein the reaction is carried out in tetrahydrofuran as the solvent.

5. The use of a compound of the formula III as claimed in claim 1, for the preparation of active compounds of the formula I of the formula I for plant protection agents.

## Revendications (Revendications pour l'(les) Etat(s) contractant(s) suivant(s) : AT, BE, CH, DE, FR, GB, IT, LI, NL)

1. Procédé pour préparer des composés de formule I 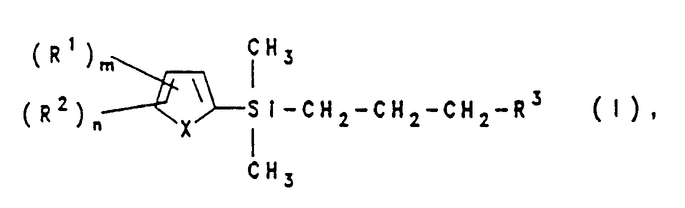 dans laquelle
X représente CH = CH, N = CH, CH = N ou S,
R¹, R² représentent, indépendamment l'un de l'autre, un halogène, un alkyle en C₁ -C_{4,} un alcoxy en C₁ -C₄, un alkylthio en C₁ -C₄, un halogénoalkyle en C₁ -C₄, un halogénoalcoxy en C₁-C₄, un halogénoalkylthio en C₁ -C₄ ou le groupe bivalent méthylènedioxy,
R³ représente un radical des formules (A), (B), (C) 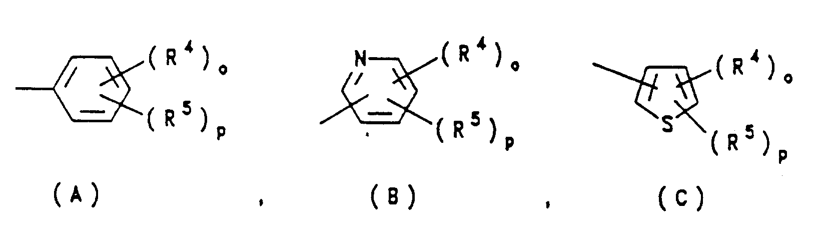
où
R⁴, R⁵ représentent, indépendamment l'un de l'autre, un halogène, un alkyle en C₁ -C_{4,} un alcoxy en Ci -C₃ ou un radical de formule (D) 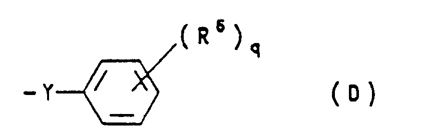
où
R⁶ représente un halogène et
Y représente CH₂, O ou S, et
m, n, o, p, q représentent 0, 1 ou 2, ce procédé étant caractérisé en ce que l'on fait réagir un composé de formule II H₂C = CH-CH₂-R³ (II),
où R³ a la signification donnée dans la formule I, en présence d'un catalyseur approprié pour des réactions d'hydrosilylation, avec le dichlorométhylsilane, et en ce que l'on fait réagir le produit intermédiaire résultant de formule III 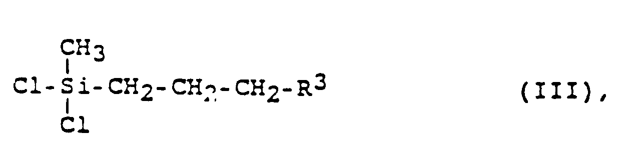 où R³ a la signification donnée dans la formule I, successivement, sans isoler le produit intermédiaire résultant, avec un halogénure de méthylmagnésium, et un halogénure d'arylmagnésium de formule générale IV 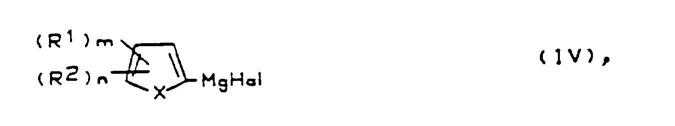 où R¹, R², m, n, et X ont la signification donnée dans la formule 1 et Hal représente un halogène.

2. Procédé selon la revendication 1, caractérisé en ce que l'on effectue la première substitution d'un atome d'halogène du composé de formule III à des températures entre -78 ° C et 80 ° C.

3. Procédé selon la revendication 1 ou 2, caractérisé en ce que l'on effectue la première substitution d'un atome d'halogène du composé de formule III à des températures de -20 ° C à + 30 ° C.

4. Procédé selon une ou plusieurs des revendications 1 à 3, caractérisé en ce que l'on effectue la réaction dans du tétrahydrofuranne comme solvant.

5. Composé de formule III 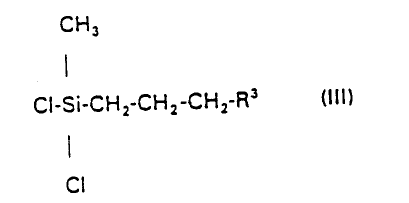 où
R³ représente un radical des formules (A), (B), (C) 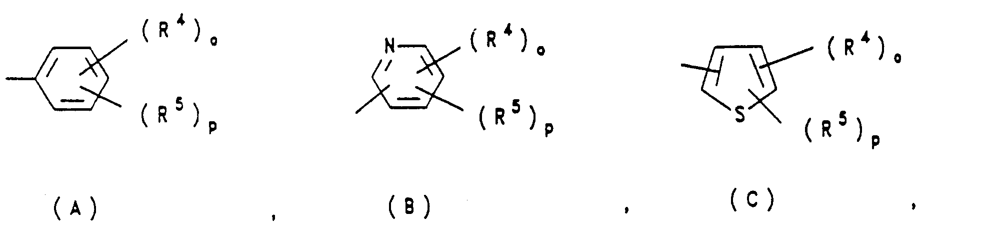
où
R⁴ R⁵ indépendamment l'un de l'autre, représentent un halogène, un alkyle en C₁ -C_{4,} un alcoxy en C₁-C₃ ou un radical de formule 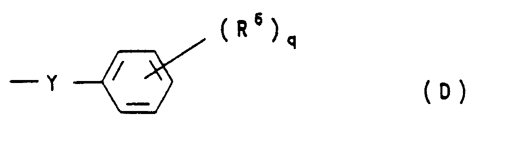
où
R⁶ représente un halogène et
Y représente CH₂, O ou S, et
o,p,q, représentent les nombres 0, 1 ou 2, à l'exception des composés suivants : le dichloro-(3-phénylpropyl)-méthyl-silane, le [(4-chlorophényl)-propyl]-dichloro-méthyl-silane, le [(3-chlorophényl)-propyl]-dichloro-méthyl-silane, le [(4-bromophényl)-propyl]-dichloro-méthyl-silane et le [(3-bromophényl)-propyl]-dichloro-méthyl-silane

6. Utilisation des composés de formule III selon la revendication 5 pour préparer des agents actifs pour la protection des plantes répondant à la formule générale I.

## Revendications (Revendications pour l'(les) Etat(s) contractant(s) suivant(s) : ES)

1. Procédé pour préparer des composés de formule I 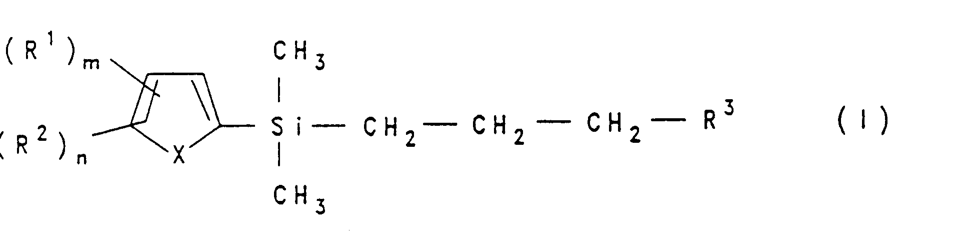 dans laquelle
X représente CH = CH, N = CH, CH = N ou S,
R¹, R² représentent, indépendamment l'un de l'autre, un halogène, un alkyle en C₁ -C_{4,} un alcoxy en C₁-C₄, un alkylthio en C₁-C₄, un halogénoalkyle en C₁-C₄, un halogénoalcoxy en C₁-C₄, un halogénoalkylthio en C₁-C₄ ou le groupe bivalent méthylènedioxy,
R³ représente un radical des formules (A), (B), (C) 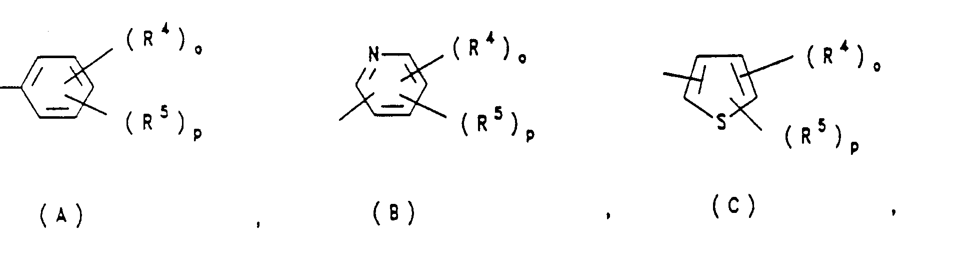
où
R⁴, R⁵ représentent, indépendamment l'un de l'autre, un halogène, un alkyle en C₁ -C_{4,} un alcoxy en Ci -C₃ ou un radical de formule (D) 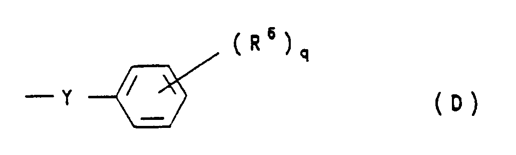
où
R⁶ représente un halogène et
Y représente CH₂, O ou S, et
m, n, o, p, q représentent 0, 1 ou 2, ce procédé étant caractérisé en ce que l'on fait réagir un composé de formule II H₂C = CH-CH₂-R³ (II),
où R³ a la signification donnée dans la formule I, en présence d'un catalyseur approprié pour des réactions d'hydrosilylation, avec le dichlorométhylsilane, et en ce que l'on fait réagir le produit intermédiaire résultant de formule III 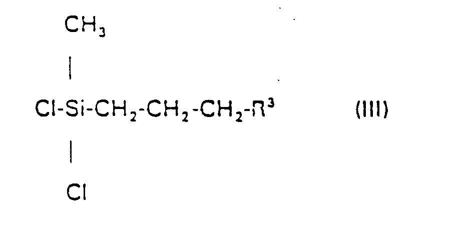 où R³ a la signification donnée dans la formule I, successivement, sans isoler le produit intermédiaire résultant, avec un halogénure de méthylmagnésium, et un halogénure d'arylmagnésium de formule générale IV 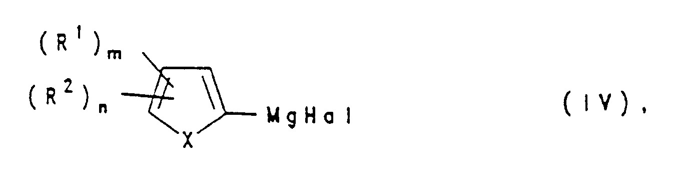 où R¹, R², m, n, et X ont la signification donnée dans la formule 1 et Hal représente un halogène.

2. Procédé selon la revendication 1, caractérisé en ce que l'on effectue la première substitution d'un atome d'halogène du composé de formule III à des températures entre -78 ° C et 80 ° C.

3. Procédé selon la revendication 1 ou 2, caractérisé en ce que l'on effectue la première substitution d'un atome d'halogène du composé de formule III à des températures de -20 ° C à + 30 ° C.

4. Procédé selon une ou plusieurs des revendications 1 à 3, caractérisé en ce que l'on effectue la réaction dans du tétrahydrofuranne comme solvant.

5. Utilisation des composés de formule III selon la revendication 1 pour préparer des agents actifs pour la protection des plantes, répondant à la formule générale I.
